# EUROPEAN PATENT SPECIFICATION

(11) **EP 3 184 437 B1**
(45) Date of publication and mention of the grant of the patent: **13.04.2022**
(21) Application number: 15461586.8
(22) Date of filing: 22.12.2015
(51) Int. Cl.: B64D 41/00, F15B 15/26

(54) **UNLOCKING MECHANISM FOR A RAM AIR TURBINE ACTUATOR**
ENTRIEGELUNGSMECHANISMUS FÜR EINE STAULUFTTURBINE AKTUATOR
MÉCANISME DE DÉVERROUILLAGE POUR UNE TURBINE ÉOLIENNE ACTIONNEUR

(43) Date of publication of application: 28.06.2017
(73) Proprietor: Hamilton Sundstrand Corporation, Charlotte, NC 28277 (US)
(72) Inventor: Sobieszek, Maciej, 50-519 Wroclaw (PL); Luczynski, Maciej, 51-317 Wroclaw (PL)
(74) Representative: Dehns

(56) References cited:
- EP-A1- 0 903 502
- WO-A1-87/02642
- US-A- 3 270 621
- US-A- 5 771 742
- US-A1- 2013 327 207

## Description

### TECHNICAL FIELD

This disclosure relates to unlocking mechanisms and in particular to an unlocking mechanism for an actuator, more particularly, but not exclusively, a ram air turbine (RAT) actuator.

### BACKGROUND

Ram air turbines are used in aircraft to provide electric and/or hydraulic power to components of the aircraft, for example in the event of failure of other electrical or hydraulic power generating equipment on board the aircraft. In normal operation of the aircraft, the RAT is housed within the aircraft, but when needed it is extended into the airflow around the aircraft such that it may turn and generate electrical and/or hydraulic power. The RAT is typically pivoted into position by means of an actuator, for example a hydraulic actuator. The actuator typically includes a piston which extends to deploy the RAT. The actuator has a lock mechanism which prevents inadvertent movement of the piston and thus inadvertent deployment of the RAT. The locking mechanism typically comprises a spring loaded lock piston which must be moved in an axial direction to unlock the actuator. Such a mechanism is disclosed for example in US 2013/0327207 A1.

An unlocking mechanism is provided to permit this movement. Typically, the unlocking mechanism comprises a two link, knee type linkage one end of which is rotatably coupled to one end of the locking piston and the other end of which is axially fixed and rotatably coupled to a support. A linear solenoid moves the linkage between a locked and an unlocked position. However, in moving between the two positions, the linkage must go "over centre" and initially displace the lock piston against the force of the lock piston spring, which means that a relatively large solenoid may be necessary.

As weight is of concern in aircraft, it would be desirable to provide a locking mechanism which may potentially be lighter

An unlocking mechanism having the features of the preamble of claim 1 is disclosed in WO 87/02642 A1.

### SUMMARY

The present invention provides an unlocking mechanism for an actuator, as set forth in claim 1.

The base may be a cup shaped element which receives a portion of the unlocking element.

A pair of opposed slots may be formed in the annular wall portion.

The unlocking element may further comprise a groove in the end surface for receiving the operating element in the first position.

The unlocking mechanism may also comprise a stop for stopping the unlocking element in one or both of the first and second positions.

The unlocking mechanism may further comprise a return spring, for biasing the unlocking element towards the first position.

The unlocking actuator may be a rotary solenoid.

The unlocking mechanism may further comprise the operating element.

The operating element may comprise friction reducing means for engagement with the end surface of the unlocking element.

The operating element may therefore, for example, comprises one or more roller elements for engagement with the end surface of the unlocking member.

The unlocking mechanism may further comprise a biasing spring for biasing the operating element into contact with the end surface of the unlocking element.

The disclosure also extends to actuator movable between a first, locked state and a second, unlocked state and comprising an unlocking mechanism in accordance with this disclosure, with the operating element of the unlocking mechanism being operatively coupled to a locking mechanism of the actuator.

The locking mechanism of the actuator may comprise the biasing spring for the operating element.

The actuator may be an actuator for a ram air turbine.

### BRIEF DESCRIPTION OF THE DRAWINGS

A non-limiting embodiment of this disclosure will now be described by way of example only with reference to the accompanying drawings in which:
Figure 1 illustrates a ram air turbine (RAT);
Figure 2 illustrates a partial view of a locking mechanism for a RAT actuator;
Figure 3 shows a first perspective view of the unlocking mechanism in a first, locking configuration;
Figure 4 shows as second perspective view of the unlocking mechanism in a second, unlocking configuration;
Figure 5 shows an axial cross section along the line V-V of Figure 3;
Figure 6 shows an axial cross section along the line VI-VI of Figure 4; and
Figure 7 shows an exploded view of the unlocking mechanism.

### DETAILED DESCRIPTION

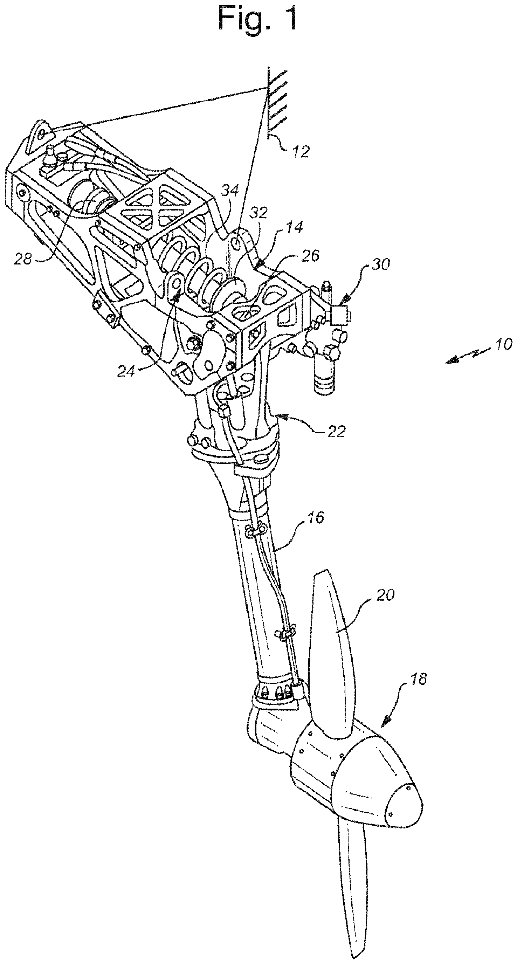

Figure 1 illustrates an RAT system 10 which is secured to an aircraft structure 12 by a housing 14. The housing 14 pivotally supports a strut 16 having a turbine 18 at one end. The turbine 18 includes blades 20, which impart rotational drive to a generator 22 and hydraulic pump 30 for example. An actuator 24 is secured to the strut at a first end 26 and to the housing at a second end 28. The actuator 24 is illustrated in its deployed position.

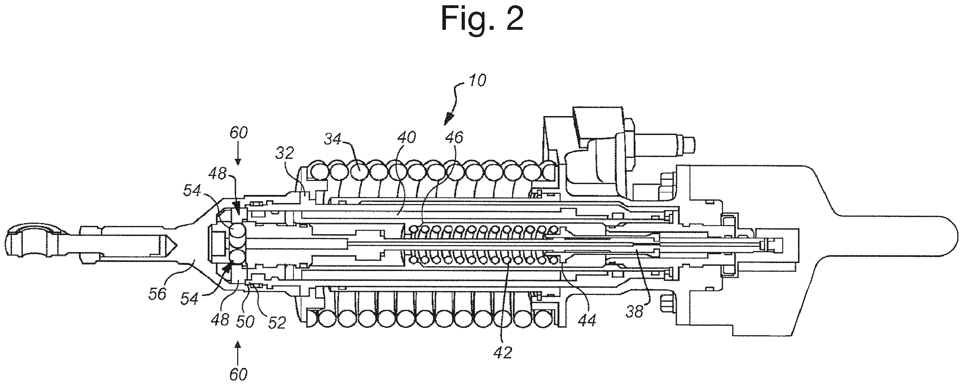

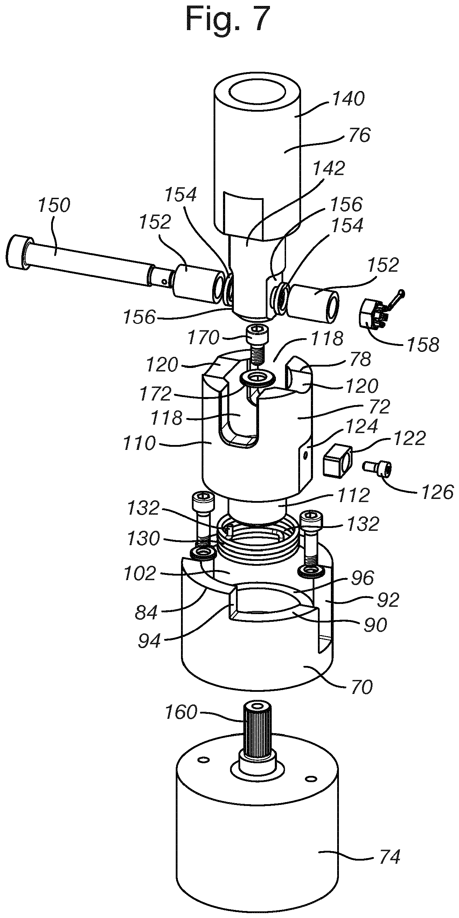

The actuator 24 comprises a cylinder 32 which is bias by a spring 34 in order to deploy the strut 16. When the cylinder 32 is retracted, it is held in its retracted position by means of a locking mechanism, details of which will be described with reference to Figures 2 to 7.

With reference to Figure 2, the locking mechanism comprises a locking piston or bolt 38 which is received slidably within a sleeve 40. The locking piston 38 is biased to the right in the sense of Figure 2 by means of a biasing spring 42 which extends between a seat 44 provided on the locking piston 38 and a seat 46 provided on the sleeve 40.

The extensible cylinder 32 of the actuator is slidably mounted around the sleeve 40. Extension of the cylinder 32 is prevented by locking elements 48 mounted at the end of the sleeve. In the locking position, respective shoulders 50, 52 of the cylinder 32 and locking wedges 48 engage to prevent axial movement of the cylinder 32.

A number of rollers 54 are mounted in the distal end 56 of the locking piston 38. However, it will be noted that when the locking piston 38 is moved to the left in a direction of arrow 58, the wedges 48 may displace in the direction of arrows 60 thereby disengaging the shoulders 50, 52 and allowing the cylinder 32 to extend to deploy the RAT.

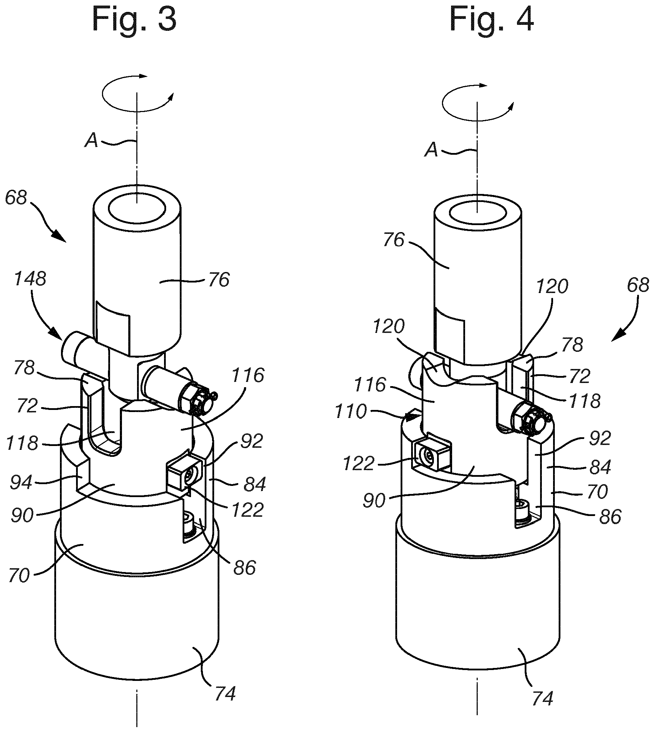

This unlocking movement of the locking piston 38 is made possible by means of an unlocking mechanism 68 which will be described with reference to Figures 3 to 7.

The unlocking mechanism 68 comprises a base 70, an unlocking element 72 rotatably mounted on the base 70, and a rotary, unlocking actuator 74 for rotating the unlocking element 72. As will be further explained below, an operating element 76 cooperates with an upper end surface 78 of the unlocking element 72 to permit the unlocking of the RAT actuator 24.

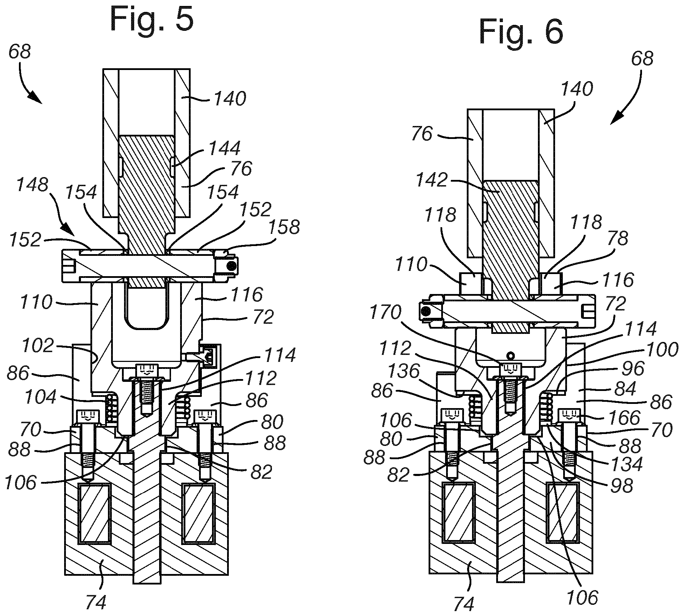

The unlocking element 72 is mounted to the base 70 for rotation about an axis A between a first, locking position illustrated in Figures 3 and 5 and a second, unlocking position shown in Figures 4 and 6.

The base 70 is a generally cup shaped element having a base wall 80 having a central aperture 82 therethrough and an annular wall 84 extending upwardly from the periphery of the base wall 80. The annular wall 84 has a pair of slots 86 formed therethrough, in this embodiment at diametrically opposed positions on the annular wall 84.

An aperture 88 is formed through the base wall 80 at the bottom of each slot 86. A recess 90 is also formed in the upper end of the annular wall 84. At one end, the recess 90 opens into one of the slots 86. The surface of the slot 86 opposite that end of the recess 90 forms a first stop surface 92. The other end of the recess 90 defines a second stop surface 94.

In this embodiment the annular wall 84 has a stepped shape, with an annular shelf 96 being formed being formed between a lower portion 98 and an upper portion 100. The upper portion 100 defines a generally circular upper inner surface 102. The lower portion 98 also defines a generally circular lower inner surface 104, having a smaller diameter than that of the upper inner surface 102. A recess 106 is formed at the base of the lower portion 98.

The unlocking element 72 comprises a generally annular upper portion 110 and a lower portion 112. The lower portion 112 is generally circular in cross section and has a splined aperture 114 formed therethrough. The upper portion 110 is generally annular, defining an annular wall 116 whose upper end defines the end surface 78 of the unlocking element 72. In this embodiment, the end surface is generally perpendicular to the wall 116.

The annular wall 116 of the unlocking element 72 is provided with a pair of opposed slots 118 which extend in an axial direction into the annular wall 116 from the end surface 78. In this embodiment, the walls of the slots 118 are parallel. Moreover, the slots extend generally perpendicularly relative to the end surface 78. However, in other embodiments, the walls of the slots 118 need not be parallel, and they may flare outwardly from one another towards the end surface 78, for example at an angle of up to 20°, for example between 10° and 15°. Also, the slots 118 need not be perpendicular to the end surface 78, but may be formed at an angle thereto in the direction of rotation of the unlocking element 72 from its locking to unlocking position.

Furthermore, a pair of much shallower opposed grooves 120 is provided in the end surface 78. In this embodiment, the grooves 120 are offset 90° from the slots 118, although other offsets may be used in accordance with the disclosure.

A stop block 122 is mounted to a pad 124 formed at a lower part of the annular wall 116 by means of a fastener 126. In this embodiment, the stop block 122 is mounted axially below one of the grooves 120.

The unlocking element 72 is received within the base 70. The upper wall portion 110 of the unlocking element 72 is received within the upper annular wall portion 100 of the base 70. The external surface 130 of the upper wall portion 110 is sized to fit within the inner surface 102 of the upper annular wall portion 110 of the base 70 so that it can rotate without interference.

The lower portion 112 of the unlocking element 72 is received within the lower annular wall portion 98 of the base 70 and extends at its lower end into the recess 106. There is a clearance between the outer surface 128 of lower portion of the locking element 72 and the inner surface 104 of the lower annular wall portion 98 of the base 70. This is to accommodate a biasing spring 130, in this embodiment a torsion spring. The torsion spring has tangs 132 formed at its respective ends for engagement within respective bores (not shown) formed in an upper surface 134 of the base wall 80 and a lower surface 136 of the unlocking element 72.

The operating element 76 in this embodiment comprises a sleeve 140 for coupling in a suitable manner to the locking piston 38 of the RAT actuator 24. A pin 142 is fixedly mounted at its upper end to the sleeve 140, in any suitable manner, for example a cross-pin not shown.

The lower end of the pin 142 has a cross bore 146 which receives an assembly 148. The assembly 148 comprises a shaft 150 which mounts a pair of roller elements 152 which can rotate on the shaft 150. The shaft 150 is fixed within the cross bore 146 by suitable means. In one example, it may be press fitted within the cross bore 146. Washers 154 are provided between the roller elements 152 and the opposed surfaces 156 of the pin 142. The roller elements 152 and the washers 154 are retained on the shaft by a lock nut 158.

The rotary unlocking actuator 74 (whose internal detail is shown only schematically in Figures 5 and 6) is, in this embodiment, a rotary solenoid. Such devices are widely available commercially and they do not therefore need detailed description here. The rotary unlocking actuator 74 does, however, comprise a rotary output shaft 160 which, in this embodiment is splined. In other embodiments, the output shaft 160 may have other drive transmitting features, for example serrations or it may have a non-circular shape. Suitable complementary formations would of course then be provided on the aperture 114 in the unlocking element 72. The upper surface 162 of the rotary unlocking actuator 74 has threaded mounting sockets 164.

The assembly and interaction of the various components will now be described.

The rotary unlocking actuator 74 is fixedly attached to the base 70 by means of fasteners, for example screw fasteners 166, which extend through the apertures 88 through the base wall 80 into the threaded openings 162 in the upper surface 164 of the rotary unlocking actuator 74. When the rotary unlocking actuator 74 is so mounted, the rotary output shaft 166 thereof projects upwardly through the aperture 82 in the base wall 80.

The torsion spring 130 may then be mounted into the base 70, with one end tang 132 being located in the corresponding bore in the upper surface 134 of the base wall 80.

The unlocking element 72 may then be mounted into the base 70 over the torsion spring 130 such that the spring's other tang 132 is located in the bore in the lower surface 136 of the unlocking element 72. The rotary shaft 166 of the rotary actuator 74 is matingly received in the splined aperture 114 of the unlocking element 72 for providing a drive to the unlocking element 72. The unlocking element 72 is mounted such that the stop block 122 is aligned with the slot 86 in the annular wall 84 of the base 70 which is at the end of the recess 90 in the annular wall 84. This position is shown in Figures 3 and 5.

The unlocking element 72 is secured to the rotary output shaft 166 of the rotary unlocking actuator 74 by means of a fastener 170 and washer 172. In this embodiment, the fastener 170 is a threaded fastener 170 which is received in a threaded bore 172 formed in the end of the rotary output shaft 166 of the rotary actuator 74. However, it will be recognised that any suitable form of attachment between the unlocking element 70 and rotary unlocking actuator 74 may be used.

The assembly of the base 70, unlocking element 72 and rotary actuator may then be mounted in a suitable fixed location relative to the RAT actuator 24.

The operating element 76 may be suitably mounted to one end of the locking piston 38 of the RAT actuator 24. In this condition, the locking piston 38 is in its locked position, and the biasing spring 42 of the locking piston 38 resiliently biases the roller elements 152 of the operating element 76 against the end surface 78 of the unlocking element 72. In this locked position, the roller elements 152 of the operating element 76 are received within the grooves 120 formed in the end surface 78 of the unlocking element 72, and the roller elements 152 and the operating element 76 are unable to move in an unlocking direction.

When it is desired to deploy the RAT actuator 24, an appropriate signal is sent to the rotary unlocking actuator 74, causing the rotary output shaft 166 thereof to rotate clockwise about axis A from the position shown in Figure 3. The rotation of the output shaft 166 causes a clockwise (in the sense of the Figures) rotation of the unlocking element 72. As the unlocking element 72 rotates, the roller elements 152 initially roll upwardly out of the grooves 120 onto the end surface 78 of the actuator element 72. Continued rotation of the unlocking element 72 brings the rolling elements into alignment with the slots 118 formed in the unlocking element 72. The biasing force of the biasing spring 42 will move the roller elements 152 into the slots 118, thereby allowing the operating element 76 to move downwardly to the position shown in Figures 4 and 6, with the roller elements 152 received on the bottom of the slots 118. This downward movement allows the movement of the actuator locking piston 38 to an unlocking position, such that the RAT actuator 24 may then be deployed.

Over-rotation of the unlocking element 72 is prevented by the shoulder 94 of the recess 90 in the annular wall 84 of the base 70.

The rotation of the unlocking element 72 relative to the base 70 will be resisted by the torsion spring 130. The torsion spring 130 will therefore apply a return force to the unlocking element 72.

The rotary actuator 74 may be de-energised after rotation, since the biasing force of the actuator spring 42 will keep the roller elements 152 in the slots 118, preventing reverse rotation of the unlocking element 72.

When the RAT is to be retracted, the lock piston 38 is moved in the opposite direction by suitable means so as to withdraw the roller elements 152 from the slots 118. Once the roller elements 152 disengage from the slots 118, the torsion springs 130 will return the unlocking element to the "locking" position shown in Figures 3 and 5. Over-rotation of the unlocking element 72 in this direction is prevented by slot surface 92. The roller elements 152 may then be received once more in the grooves 120.

It will be understood that the above is a description of a non-limiting embodiment and that various changes and modifications may be made to the embodiment without departing from the scope of the claims.

For example, the locating grooves 120 on the end surface 78 of the unlocking element may be modified or possibly even omitted. They may be advantageous, however, in proving a precise location for the roller elements 152 of the operating element 76 in the locked position and prevent or reduce movement of the roller elements 152 in operation.

Also the operating element 76 could be modified. For example, while the use of roller elements 152 may be particularly beneficial, in alternative embodiments, the roller elements 152 could be replaced by simple pins (for example the surface of the shaft 150) which may slide on the end surface 78. Friction reducing means, for example a low friction coating could be provided on one or both of the operating element 76 and the unlocking element 72 for reducing the frictional forces between them. The advantage of friction reducing means, for example roller elements 152, is that it will reduce the torque required by the rotary actuator 74 to rotate the unlocking element 72. It will also reduce the friction between the operating element 78 and the slots 118 of the actuating element 72, reducing frictional wear on the slots 118.

Also, while the locked and unlocked positions of the unlocking element 72 are illustrated as being 90° apart, other angular separations may also be envisaged.

The rotary unlocking actuator 74 is shown as being a rotary solenoid. However, any actuator capable of producing a rotary output may be used.

In its various embodiments, the disclosure may provide a number of advantages over the "knee-type" mechanisms discussed earlier. Firstly, the force required to overcome the biasing effect of the actuator locking piston spring may be significantly smaller. In the earlier arrangements, the unlocking force was proportional to the spring force. The arrangement of this disclosure does not require such a force. This means that a less powerful, and therefore lighter, actuator may be used, which is of particular importance in aircraft applications.

Also, the arrangements disclosed herein may be less susceptible to operating conditions and vibration, potentially making them more reliable than the prior systems. Also, they may be less susceptible to manufacturing tolerances, making assembly and testing of the actuator easier and less expensive.

While the disclosure has been in the context of unlocking a RAT actuator, it will be appreciated that the mechanism of this disclosure nay be used in other applications, particularly those where a small force may be required to unlock a much larger accumulated force.

It will also be understood that the use of terms such as upper and lower herein should be regarded as relative terms and not imply any particular orientation of components in use.

## Claims

1. An unlocking mechanism (68) for an actuator (24) comprising:
a base (70);
an unlocking element (72) mounted to said base (70) for rotation around an axis (A) between a first, locking position and a second, unlocking position; and
an unlocking actuator (74) for rotating said unlocking element (72) between said first and second positions;
said unlocking element (72) has an axially facing end surface (78) for engagement, in the first position, with an operating element (76), and further comprising a slot (118) extending axially thereinto from said end surface (78) for receiving the operating element (78) in the second position for permitting an unlocking movement of the operating element along the slot (118); and **characterised in that**
the unlocking element (72) comprise an annular wall portion (116), with the slot (118) being formed in the annular wall portion (116).

2. An unlocking mechanism as claimed in claim 1, wherein the base (70) is a cup shaped element which receives a portion of the unlocking element (72).

3. An unlocking mechanism as claimed in claim 1 or 2, comprising a pair of opposed slots (118) formed in the annular wall portion (116).

4. An unlocking mechanism as claimed in any preceding claim, further comprising a groove (120) in the end surface (78) for receiving the operating element (76) in the first position.

5. An unlocking mechanism as claimed in any preceding claim, further comprising a stop (122) for stopping the unlocking element (72) in one or both of the first and second positions.

6. An unlocking mechanism as claimed in any preceding claim, further comprising a return spring (130), for biasing the unlocking element (72) towards the first position.

7. An unlocking mechanism as claimed in any preceding claim, wherein the unlocking actuator (74) comprises a rotary solenoid.

8. An unlocking mechanism as claimed in any preceding claim, further comprising the operating element (76).

9. An unlocking mechanism as claimed in claim 8, wherein the operating element (76) comprises friction reducing means for engagement with the end surface (78) of the unlocking element (72).

10. An unlocking mechanism as claimed in claim 9, wherein the operating element (76) comprises one or more roller elements (152) for engagement with the end surface (78) of the unlocking member (72).

11. An unlocking mechanism as claimed in any preceding claim, further comprising a biasing spring (42) for biasing the operating element (76) into contact with the end surface (78) of the unlocking element (72).

12. An actuator (24) movable between a first, locked state and a second, unlocked state and comprising an unlocking mechanism (68) as claimed in any of claims 8 to 11, wherein the operating element (76) of the unlocking mechanism (68) is operatively coupled to a locking mechanism (36) of the actuator (24).

13. An actuator as claimed in claim 12, wherein the locking mechanism (36) of the actuator (24) comprises the biasing spring (42) for the operating element (76).

14. An actuator as claimed in claims 12 or 13, wherein the actuator (24) is an actuator for a ram air turbine.

## Patentansprüche

1. Entriegelungsmechanismus (68) für einen Aktuator (24), umfassend:
eine Basis (70);
ein Entriegelungselement (72), das an der Basis (70) zur Drehung um eine Achse (A) zwischen einer ersten Verriegelungsposition und einer zweiten Entriegelungsposition montiert ist; und
einen Entriegelungsaktuator (74) zum Drehen des Entriegelungselements (72) zwischen der ersten und zweiten Position;
wobei das Entriegelungselement (72) eine axial gerichtete Stirnfläche (78) zum Eingriff mit einem Betätigungselement (76) in der ersten Position aufweist, und ferner umfassend eine Aussparung (118), die sich von der Stirnfläche (78) axial dort hinein erstreckt, um das Betätigungselement (78) in der zweiten Position aufzunehmen, um eine Entriegelungsbewegung des Betätigungselements entlang der Aussparung (118) zuzulassen; und
**dadurch gekennzeichnet, dass**
das Entriegelungselement (72) einen ringförmigen Wandabschnitt (116) umfasst, wobei die Aussparung (118) in dem ringförmigen Wandabschnitt (116) ausgebildet ist.

2. Entriegelungsmechanismus nach Anspruch 1, wobei die Basis (70) ein schalenförmiges Element ist, das einen Abschnitt des Entriegelungselements (72) aufnimmt.

3. Entriegelungsmechanismus nach Anspruch 1 oder 2, umfassend ein Paar gegenüberliegender Aussparungen (118), das in dem ringförmigen Wandabschnitt (116) ausgebildet ist.

4. Entriegelungsmechanismus nach einem der vorstehenden Ansprüche, ferner umfassend eine Nut (120) in der Stirnfläche (78) zum Aufnehmen des Betätigungselements (76) in der ersten Position.

5. Entriegelungsmechanismus nach einem der vorstehenden Ansprüche, ferner umfassend einen Anschlag (122) zum Stoppen des Entriegelungselements (72) in einer oder beiden der ersten und zweiten Position.

6. Entriegelungsmechanismus nach einem der vorstehenden Ansprüche, ferner umfassend eine Rückstellfeder (130) zum Vorspannen des Entriegelungselements (72) in Richtung der ersten Position.

7. Entriegelungsmechanismus nach einem der vorstehenden Ansprüche, wobei der Entriegelungsaktuator (74) ein drehendes Solenoid umfasst.

8. Entriegelungsmechanismus nach einem der vorstehenden Ansprüche, ferner umfassend das Betätigungselement (76).

9. Entriegelungsmechanismus nach Anspruch 8, wobei das Betätigungselement (76) eine reibungsreduzierende Einrichtung zum Eingriff mit der Stirnfläche (78) des Entriegelungselements (72) umfasst.

10. Entriegelungsmechanismus nach Anspruch 9, wobei das Betätigungselement (76) ein oder mehrere Walzenelemente (152) zum Eingriff mit der Stirnfläche (78) des Entriegelungselements (72) umfasst.

11. Entriegelungsmechanismus nach einem der vorstehenden Ansprüche, ferner umfassend eine Vorspannfeder (42) zum Vorspannen des Betätigungselements (76) in Kontakt mit der Stirnfläche (78) des Entriegelungselements (72).

12. Aktuator (24), der zwischen einem ersten verriegelten Zustand und einem zweiten entriegelten Zustand bewegbar ist und einen Entriegelungsmechanismus (68) nach einem der Ansprüche 8 bis 11 umfasst, wobei das Betätigungselement (76) des Entriegelungsmechanismus (68) an einen Verriegelungsmechanismus (36) des Aktuators (24) wirkgekoppelt ist.

13. Aktuator nach Anspruch 12, wobei der Verriegelungsmechanismus (36) des Aktuators (24) die Vorspannfeder (42) für das Betätigungselement (76) umfasst.

14. Aktuator nach Ansprüchen 12 oder 13, wobei der Aktuator (24) ein Aktuator für eine Stauluftturbine ist.

## Revendications

1. Mécanisme de déverrouillage (68) pour un actionneur (24) comprenant :
une base (70) ;
un élément de déverrouillage (72) monté sur ladite base (70) pour une rotation autour d'un axe (A) entre une première position de verrouillage et une seconde position de déverrouillage ; et
un actionneur de déverrouillage (74) pour la rotation dudit élément de déverrouillage (72) entre lesdites première et
seconde positions ;
ledit élément de déverrouillage (72) a une surface d'extrémité orientée axialement (78) pour une mise en prise, dans la première position, avec un élément de commande (76), et comprenant en outre une fente (118) s'étendant axialement à partir de ladite surface d'extrémité (78) pour recevoir l'élément de commande (78) dans la seconde position pour permettre un mouvement de déverrouillage de l'élément de commande le long de la fente (118) ; et **caractérisé en ce que**
l'élément de déverrouillage (72) comprend une partie de paroi annulaire (116), la fente (118) étant formée dans la partie de paroi annulaire (116).

2. Mécanisme de déverrouillage selon la revendication 1, dans lequel la base (70) est un élément cupuliforme qui reçoit une partie de l'élément de déverrouillage (72).

3. Mécanisme de déverrouillage selon la revendication 1 ou 2, comprenant une paire de fentes opposées (118) formées dans la partie de paroi annulaire (116).

4. Mécanisme de déverrouillage selon une quelconque revendication précédente, comprenant en outre une rainure (120) dans la surface d'extrémité (78) pour recevoir l'élément de commande (76) dans la première position.

5. Mécanisme de déverrouillage selon une quelconque revendication précédente, comprenant en outre une butée (122) pour arrêter l'élément de déverrouillage (72) dans l'une ou les deux parmi les première et seconde positions.

6. Mécanisme de déverrouillage selon une quelconque revendication précédente, comprenant en outre un ressort de rappel (130), pour solliciter l'élément de déverrouillage (72) vers la première position.

7. Mécanisme de déverrouillage selon une quelconque revendication précédente, dans lequel l'actionneur de déverrouillage (74) comprend un solénoïde rotatif.

8. Mécanisme de déverrouillage selon une quelconque revendication précédente, comprenant en outre l'élément de commande (76).

9. Mécanisme de déverrouillage selon la revendication 8, dans lequel l'élément de commande (76) comprend un moyen de réduction de friction pour la mise en prise avec la surface d'extrémité (78) de l'élément de déverrouillage (72).

10. Mécanisme de déverrouillage selon la revendication 9, dans lequel l'élément de commande (76) comprend un ou plusieurs éléments roulants (152) pour une mise en prise avec la surface d'extrémité (78) de l'élément de déverrouillage (72).

11. Mécanisme de déverrouillage selon une quelconque revendication précédente, comprenant en outre un ressort de sollicitation (42) pour solliciter l'élément de commande (76) en contact avec la surface d'extrémité (78) de l'élément de déverrouillage (72).

12. Actionneur (24) mobile entre un premier état verrouillé et un second état déverrouillé et comprenant un mécanisme de déverrouillage (68) selon l'une quelconque des revendications 8 à 11, dans lequel l'élément de commande (76) du mécanisme de déverrouillage (68) est accouplé de manière fonctionnelle à un mécanisme de verrouillage (36) de l'actionneur (24).

13. Actionneur selon la revendication 12, dans lequel le mécanisme de verrouillage (36) de l'actionneur (24) comprend le ressort de sollicitation (42) de l'élément de commande (76).

14. Actionneur selon les revendications 12 ou 13, dans lequel l'actionneur (24) est un actionneur pour une turbine à air dynamique.
